# EUROPEAN PATENT SPECIFICATION

(11) **EP 4 045 252 B1**
(45) Date of publication and mention of the grant of the patent: **03.04.2024**
(21) Application number: 20807133.2
(22) Date of filing: 06.10.2020
(51) Int. Cl.: B29B 17/00, B29B 17/02, B29B 17/04

(54) **PROCESS FOR THE PRODUCTION OF RUBBER GRANULES FROM END OF LIFE TIRES SUITABLE FOR THE DEVULCANIZATION PROCESS THROUGH MECHANICAL THERMAL REACTOR**
VERFAHREN ZUR HERSTELLUNG VON GUMMI-GRANULEN AUS END_OF_LIFE-REIFEN, DIE FÜR DEN DEVULCANISIERUNGSVERFAHREN DURCH MECHANISCHEN THERMISCHEN REAKTOR GEEIGNET SIND
PROCESSUS DE PRODUCTION DE GRANULES DE CAOUTCHOUC À PARTIR DE PNEUS END_OF_LIFE ADAPTÉS AU PROCESSUS DE DÉVULCANISATION À TRAVERS UN RÉACTEUR THERMIQUE MÉCANIQUE

(30) Priority: 15.10.2019 IT 201900018791
(43) Date of publication of application: 24.08.2022
(73) Proprietor: Ecotyre S.C.R.L., 10048 Vinovo (IT)
(72) Inventor: SCOLA, Davide, 10048 VINOVO (IT)
(74) Representative: Garavelli, Paolo
(86) International application number: PCT/IT2020/050247
(87) International publication number: WO 2021/074938

(56) References cited:
- US-A- 2 471 043
- US-A- 4 025 990
- US-A- 4 113 186
- US-A- 5 234 171
- US-A- 5 299 744
- US-A1- 2005 107 484
- C Ta ET AL: "8/01/2021 Densimetric Table Separators - SEPARATION EXPERTS The Rollier Densimetric Table Separator - Model Morrisfeed SEPARATION EXPERTS", , 16 August 2018 (2018-08-16), XP055766126, Retrieved from the Internet: URL:https://web.archive.org/web/2018081621 2718/http://separationexperts.com/densimet ric-table-separators/

## Description

The present invention refers to a process which allows producing rubber granules deriving from End of Life Tires (ELT) suitable for the devulcanization process through a thermal-mechanical reactor.

As is well known, today's economic and environmental pressures have introduced a change in the way society and industry look at the plastic materials used in various fields and in production. Depending on the requirements of certain items and their applications, manufacturers and end users now have a wide range of materials at their disposal from which to make a careful choice, based on price/performance ratio and environmental credentials (for example, the content of recycled material).

With these perspectives, processes have been developed for the reuse of secondary raw materials or recycled materials that can be used for the manufacture of products with less sophisticated specifications, for which price has priority. These secondary raw materials can be, for example, "End of Life Tires" (ELT). A method for treating ELTs is for example known from US2005/107484 A1.

Therefore, object of the present invention is solving the aforementioned prior art problems by providing a process capable of producing rubber granules of the correct size (granulometry), purified from any polluting element (such as, for example, metals and textile or plastic fibers), preserving the qualities of the original blend and thus preventing the degradation of the polymeric components and other components, such as carbon black and the oils present.

Another object of the present invention is providing a process for the production of rubber granules from ELTs which is suitable for a devulcanization process through a mechanical thermal reaction process, in order to guarantee the qualitative constancy and the suitable chemical-physical characteristics, and suitable for obtaining a product that can be used in the technical rubber industry.

The above and other objects and advantages of the invention, which will appear from the following description, are obtained with a process as claimed in claim 1. Preferred embodiments and non-trivial variants of the present invention are the subject of the dependent claims.

It is understood that all enclosed claims form an integral part of the present description.

It will be immediately obvious that numerous variations and modifications (for example related to shape, sizes, arrangements and parts with equivalent functionality) can be made to what has been described without departing from the scope of the invention as included in the attached claims.

The present invention will be better described by some preferred embodiments thereof, provided as a non-limiting example.

As will be seen in greater detail below, granules will be produced by the process according to the present invention from ELTs of different use, and preferably from truck and/or car and/or light transport vehicle tires, as well as from tires of earth-moving machines and/or agricultural vehicles (agricultural tractors).

In particular:
- truck ELTs have the general characteristic of a highly prevalent polymer composition of the elastomer based on NR (natural rubber) and little prevalence of SBR (synthetic rubber based on styrene butadiene): they also require the presence of metals with the prevalence of harmonic steel as a load-bearing and reinforcement structure;
- the ELTs of earth-moving machinery and/or agricultural vehicles have, as a general characteristic, a polymer composition of the elastomer based on SBR (synthetic rubber based on styrene butadiene) and little prevalence of NR (natural rubber); they also provide for the presence of metals with the prevalence of harmonic steel as a load-bearing and reinforcing structure and the strong presence of textile fibers in the internal bands and of plastic fibers such as polyester in the tread part;
- ELTs of cars and light transport vehicles have, as a general feature, a polymer composition of the elastomer based on SBR (synthetic rubber based on styrene butadiene) and little prevalence of NR (natural rubber); they also provide for the presence of metals with the prevalence of harmonic steel as a load-bearing and reinforcing structure and the strong presence of textile fibers in the internal bands.

Obviously, the different types of tires indicated above, in addition to differing in their uses, are distinguished by construction engineering and different types of elastomers, as well as by load-bearing and reinforcing structures, such as metals and textile and plastic fibers; precisely, these characteristics require the implementation of the process according to the present invention by means of different processes with as many specific equipment and treatments.

The process according to the present invention therefore comprises the following steps:
- selection of the ELTs to be treated: in particular, this selection step consists in the selection of tires that do not show excessive oxidation and do not show the phenomenon of saponification and evident deterioration; in this step, old production tires must also be discarded where there is a doubt about the presence of aromatic amines. This selection step takes place, for example, through the visual control of an operator who, in addition to verifying the conditions described above, will determine the production date by reading the DOT code (code indicating the week and year of production) shown on the side of the carcass of the tire itself. In addition, tires of poor quality, produced by manufacturers known for their low selling price on the market, will also be rejected;
- coarse crushing of the tire to make a shredded ELT: in particular, this coarse crushing step is carried out through a mechanical process which reduces the tire into coarse pieces, preferably with a size varying between 10 and 20 cm. At this stage we still have the presence of metal which will be totally eliminated in the next steps;
- volumetric reduction of the shredded ELT for the production of raw rubber granules: preferably, this step takes place by means of at least one mechanical granulator, which, through the passage of rollers equipped with blades, determines the volumetric reduction and allows the separation from metals and any fibers textiles and/or plastics, as they are crushed and separated from the rough rubber granules. In order for polymer degradation not to occur, this mechanical granulator must be refrigerated, as the mechanical shredding process generates an uncontrollable temperature rise due to the friction between the rubber and the shredding rollers: in particular, this temperature must never exceed 40 °C as it would deteriorate the NR-based polymeric component, with consequent unsuitability of the product;

- substantially total elimination of the metals from these raw rubber granules: once the raw rubber granules from the previous step have been obtained, this step provides that they are preferably passed through one or more stations (preferably three) for the capture of the metals through special machines equipped with magnets that capture both the slag of the free metals and the granules that still contain some metal, thus guaranteeing the almost total remediation of metals;
- elimination of any textile and/or plastic fibers from these raw rubber granules: since there is the remote possibility of the presence of any textile or plastic fibers, this step provides that the granules are passed, preferably, in at least one wadding tower, which works through an electrostatic process, i.e. it captures any fibers present in the flow of the granules obtained up to now;
- selection of the rubber granules based on the size: to obtain the desired quality of the rubber granules, it is therefore necessary that they are selected by size: preferably, this step takes place by passing the rubber granules in metal sieves combined with a machine vibrator that allows the passage of only the granules of the required size: the purpose of this operation is absolutely necessary since the presence of smaller granulometries (for example dust with a size of 0.8 mm), which naturally are generated through the shredding process, would compromise the performance of the obtained granules;
- curing of rubber granules: this step is necessary because even if all the necessary precautions are used, the ELTs have inevitably been subjected to mechanical stress and, albeit in a rough way, the various mechanical processes and the following steps have broken some bonds and electrostatically charged the granules which are therefore not yet fully suitable for the devulcanization process: this step is therefore preferably performed by arranging the rubber grains in special containers placed in a closed warehouse, preferably at a constant temperature of about 20 °C, with forced aeration and washing of the air through a column that acts with sodium hypochlorite and soda, preferably for a period of at least 45 days, to obtain a suitable maturation of the granules themselves.

At this point, the rubber granules produced by the above steps of the process according to the present invention are suitable for the devulcanization process.

The process according to the present invention, in the case in which the ELTs derive from trucks, agricultural vehicles and/or earth-moving machines, also includes the bead breaking step of the tire: the bead breaking step is then performed through a special machine called "bead breaking machine" which through a mechanical process separates the ring made of harmonic steel from the tire, in the area called "bead", which comes into contact with the rim. Note that this bead breaking step is not necessary if the ELTs derive from cars and/or light transport vehicles as the sealing ring present in this type of tire, even if made of steel, does not create substantial problems in the process according to the present invention.

The process according to the present invention, in the case in which the ELTs derive from agricultural vehicles and/or earth-moving machines, also comprises a further step of eliminating plastic fibers from the raw rubber granules: this further step is necessary since the fibers plastics such as polyester are not completely eliminated from the previous step of elimination of plastic fibers by means of the electrostatic padding process and, consequently, this step can be performed by means of a special machine designed for this function, which provides for example the passage on a conveyor belt which, through eddy currents and the identification of the specific weight, successfully separates this last pollutant constituted by the residual plastic fibers.

In particular:
- in the event that the ELTs derive from trucks, the rough rubber granules made in the step of volumetric reduction of the shredded ELTs have a size preferably between 2.5 and 4 mm;
- in the event that the ELTs derive from agricultural vehicles and/or earth-moving machines, the rough rubber granules made in the volumetric reduction step of the shredded ELT have a size between 4 and 5 mm;
- in the event that the ELTs derive from cars and/or vehicles for light transport, the rough rubber granules made in said step of volumetric reduction of the shredded ELTs have a size between 2.5 and 3.5 mm.

A further treatment step, common to all granulates from PFU (of any origin) consists in separating the granules, due to their chemical nature, namely, as described above, any tire is composed of different parts (flanks, reinforcing bands, beads, threads, etc.), and each one of them has a different chemical composition, so that a natural rubber could prevail, instead of a synthesis rubber and vice versa; a heterogeneous mixture of "mixed" granules would provide several problems to the devulcanization process, since it would be impossible to manage the reactor parameters depending on the different chemical compositions.

From this, the ideal inventive solution consists in a separation of the granules through a system of very sensible vibrating densimetric tables, and with the help of aimed air jets, also called eddy currents, which separate the granules based on their mean specific weight. Granules with a high amount of natural rubber have a specific weight of about 0.93, while synthetic rubbers have a specific weight greater than 0.96: this difference allows obtaining a sorting process (with at least 3 passes) equal to 900.

With this last and laborious process, it is possible to obtain a granule from PFU lacking pollutants made of metals and textile or plastic fibers, but above all separated due to its chemical nature, which allows obtaining a high-quality devulcanized product, absolutely re-usable in the technical rubber industry.

The process according to the present invention as described above therefore allows to achieve the intended purposes: in particular, this process is the result of countless tests and attempts, supported by laboratory tests such as infrared analyzes on germanium and TGA crystals, which can certify the degradation index of the polymer and of the other fillers and components present in the ELTs; moreover, the devulcanization tests through a mechanical thermal reactor have given excellent results that make the specially treated granule able to obtain a mixture of elastomers, Carbon Black and other ingredients suitable for being used in the technical rubber industry with success, giving real impulse to the circular economy that finally makes it possible to reuse what was previously a mere waste in material comparable to virgin.

## Claims

1. Process for the production of rubber granules deriving from End of Life Tires, subsequently referred to as ELTS, suitable for the devulcanization process through a thermal-mechanical process, wherein said ELTs are selected from truck tires and/or agricultural vehicles and/o earth-moving machinery and/or cars and/or light transport vehicles, the process comprising the following steps:
- selection of the ELTs to be treated, said selection step consisting in the selection of tires that do not show oxidation and do not show a phenomenon of saponification and evident deterioration, old production tires having to be discarded where there is a doubt about the presence of aromatic amines therein;
- coarse crushing of the tire to create a shredded ELT, said coarse crushing step being carried out through a mechanical process which reduces the tire into coarse pieces, preferably with a size varying between 10 and 20 cm;
- volumetric reduction of shredded ELT for the production of raw rubber granules, said step taking place by means of at least one mechanical granulator, which, through -the passage of rollers equipped with blades, determines the volumetric reduction and allows the separation from metals and any fibers textiles and/or plastics, as they are crushed and separated from the rough rubber granules, in order for polymer degradation not to occur, this mechanical granulator being refrigerated to prevent from reaching a temperature greater than 40 °C;
- separation of the granules through a system of vibrating densimetric tables, and with the help of aimed air jets, which separate the granules based on their mean specific weight, thereby obtaining:
* removal of metals from said raw rubber granules;
* elimination of any textile and/or plastic fibers from said raw rubber granules; and
- selection of rubber granules based on size;
- curing of rubber granules by arranging the rubber granules in containers placed in a closed warehouse, preferably at a constant temperature of about 20°C, with forced aeration and washing of air through a column that acts with sodium hypochlorite and soda, preferably for a period of at least 45 days, to obtain a maturation of the granules.

2. Process according to claim 1, **characterized in that** said coarse crushing step reduces said tire into coarse pieces with a size varying between 10 and 20 cm.

3. Process according to any one of the previous claims, **characterized in that** it comprises the step of bead breaking said tire when said ELTs derive from trucks, agricultural vehicles and/or earth-moving machines.

4. Process according to any one of the previous claims, **characterized in that** if said ELTs derive from trucks, said rough rubber granules made in said volumetric reduction step of said shredded ELT have a size between 2.5 and 4 mm.

5. Process according to any one of the previous claims, **characterized in that**, in the case in which said ELTs derive from agricultural vehicles and/or earth-moving machines, said raw rubber granules made in said volumetric reduction step of said shredded ELT have a size between 4 and 5 mm.

6. Process according to any one of the previous claims, **characterized in that**, in the case in which said ELTs derive from cars and/or vehicles for light transport, said rough rubber granules made in said volumetric reduction step of said shredded ELT have a size between 2.5 and 3.5 mm.

7. Process according to any one of the previous claims, **characterized in that**, if said ELTs derive from agricultural vehicles and/or earth-moving machines, it comprises a further step of eliminating plastic fibers from said raw rubber granules.

## Patentansprüche

1. Verfahren zur Herstellung von Gummigranulat aus Altreifen, im Folgenden ELTs genannt, geeignet für den Devulkanisierungsprozess durch einen thermischmechanischen Prozess, bei dem die ELTs aus LKW und/oder Fahrzeugen ausgewählt werden Reifen von landwirtschaftlichen Maschinen und/oder Erdbaumaschinen und/oder Autos und/oder leichten Transportfahrzeugen, wobei der Prozess die folgenden Phasen umfasst:
- Auswahl der zu behandelnden Altreifen, wobei diese Auswahlphase die Auswahl von Reifen umfasst, die keine Oxidation aufweisen und kein Verseifungsphänomen und keine offensichtliche Verschlechterung aufweisen; im Zweifelsfall müssen die alten Produktionsreifen entsorgt werden von aromatischen Aminen in ihnen;
- grobes Zerkleinern des Reifens, um einen glatten ELT zu erzeugen, wobei die grobe Zerkleinerungsphase durch einen mechanischen Prozess durchgeführt wird, der den Reifen in grobe Stücke zerkleinert, vorzugsweise mit Abmessungen zwischen 10 und 20 cm;
- Volumenreduzierung des zerkleinerten ELT zur Herstellung von Rohgummigranulat, wobei diese Phase durch mindestens einen mechanischen Granulator erfolgt, der durch den Durchgang von mit Messern ausgestatteten Walzen die Volumenreduzierung bestimmt und die Trennung von Metallen und Textilien ermöglicht Fasern und/oder Kunststoff, wenn sie zerkleinert und vom Rohgummigranulat getrennt werden, so dass es nicht zu einer Zersetzung des Polymers kommt, wobei dieser mechanische Granulator gekühlt ist, um zu verhindern, dass eine Temperatur über 40 °C erreicht wird;
- Trennung der Granulatkörner mithilfe eines Systems vibrierender Densimetrietische und mithilfe gezielter Luftdüsen, die die Granulatkörner anhand ihres durchschnittlichen spezifischen Gewichts trennen und so Folgendes erreichen:
* Entfernung von Metallen aus den Rohkautschukkörnchen;
* Entfernung jeglicher Textil- und/oder Kunststofffasern aus den Rohkautschukkörnern;
- Auswahl von Gummigranulat nach Größe;
- Würzen der Gummikörner durch Anordnen der Gummikörner in Behältern, die in einem geschlossenen Lagerhaus aufgestellt werden, vorzugsweise bei einer konstanten Temperatur von etwa 20 °C, mit Zwangsbelüftung und Luftwäsche durch eine Säule, die mit Natriumhypochlorit und Soda wirkt, vorzugsweise für a Zeitraum von mindestens 45 Tagen, um eine angemessene Reifung des Granulats selbst zu erreichen.

2. Verfahren nach Anspruch 1, **dadurch gekennzeichnet, dass** der Grobzerkleinerungsschritt den Reifen in grobe Stücke mit einer Größe zwischen 10 und 20 cm zerkleinert.

3. Verfahren nach einem der vorhergehenden Ansprüche, **dadurch gekennzeichnet, dass** die Wulstbrechphase des Reifens in den Fall einbezogen wird, wenn die ELTs von Lastkraftwagen, landwirtschaftlichen Fahrzeugen und/oder Erdbewegungsmaschinen stammen.

4. Verfahren nach einem der vorhergehenden Ansprüche, **dadurch gekennzeichnet, dass** in dem Fall, in dem die ELTs von Lastkraftwagen stammen, die in der volumetrischen Reduktionsphase der gepflasterten ELTs hergestellten Rohkautschukkörner eine Größe zwischen 2,5 und 4 mm haben.

5. Verfahren nach einem der vorhergehenden Ansprüche, **dadurch gekennzeichnet, dass** in dem Fall, in dem die ELTs von landwirtschaftlichen Fahrzeugen und/oder Erdbewegungsmaschinen stammen, die Rohkautschukkörner in der volumetrischen Reduktionsphase der gepflasterten ELTs hergestellt werden haben eine Größe zwischen 4 und 5 mm.

6. Verfahren nach einem der vorhergehenden Ansprüche, **dadurch gekennzeichnet, dass** in dem Fall, in dem die ELTs von Autos und/oder leichten Transportfahrzeugen stammen, die Rohkautschukkörner, die in der volumetrischen Reduktionsphase der gepflasterten ELTs hergestellt wurden, eine Größe zwischen 2,5 und 3,5 mm.

7. Verfahren nach einem der vorhergehenden Ansprüche, **dadurch gekennzeichnet, dass** es in dem Fall, in dem die ELTs von landwirtschaftlichen Fahrzeugen und/oder Erdbewegungsmaschinen stammen, eine weitere Phase der Entfernung von Kunststofffasern aus dem Rohkautschuk umfasst Granulat.

## Revendications

1. Procédé de production de granulés de caoutchouc dérivés de pneus usagés, ci-après dénommés ELT, adaptés au processus de dévulcanisation par un processus thermomécanique, dans lequel lesdits ELT sont sélectionnés parmi les camions et/ou les véhicules, pneumatiques, engins agricoles et/ou de terrassement et/ou automobiles et/ou véhicules légers de transport, le procédé comprenant les phases suivantes:
- sélection des ELT à traiter, ladite phase de sélection comprenant la sélection de pneumatiques ne présentant pas d'oxydation et ne présentant pas de phénomène de saponification et de détérioration évidente, les anciens pneumatiques de production devant être écartés en cas de doute relatif à la présence d'amines aromatiques en eux;
- broyage grossier du pneumatique pour créer un ELT glissant, ladite phase de broyage grossier étant réalisée par un procédé mécanique qui réduit le pneumatique en gros morceaux, de préférence de dimensions variant entre 10 et 20 cm;
- réduction volumétrique de l'ELT broyé pour la production de granulés de caoutchouc brut, cette phase se déroulant à travers au moins un granulateur mécanique qui, par le passage de rouleaux équipés de pales, détermine la réduction volumétrique et permet la séparation des métaux et de tout textile des fibres et/ou du plastique, car ils sont broyés et séparés des granulés de caoutchouc brut, de sorte qu'une dégradation du polymère ne se produise pas, ce granulateur mécanique étant réfrigéré pour éviter d'atteindre une température supérieure à 40°C;
- séparation des granulés à l'aide d'un système de tables densimétriques vibrantes, et à l'aide de jets d'air ciblés, qui séparent les granulés en fonction de leur poids spécifique moyen, obtenant ainsi:
* élimination des métaux desdits granulés de caoutchouc brut;
* élimination de toutes fibres textiles et/ou plastiques desdits granulés de caoutchouc brut;
- sélection de granulés de caoutchouc en fonction de leur taille;
- assaisonnement des granulés de caoutchouc en disposant les grains de caoutchouc dans des récipients placés dans un entrepôt fermé, de préférence à une température constante d'environ 20°c, avec aération forcée et lavage à l'air à travers une colonne qui agit avec de l'hypochlorite de sodium et de la soude, de préférence pendant une période d'au moins 45 jours, pour obtenir une maturation appropriée des granulés eux-mêmes.

2. Procédé selon la revendication 1, **caractérisé en ce que** ladite étape de concassage grossier réduit ledit pneumatique en gros morceaux de taille variant entre 10 et 20 cm.

3. Procédé selon l'une quelconque des revendications précédentes, **caractérisé par** le fait d'inclure la phase de décolletage dudit pneumatique dans le cas où lesdits ELT proviennent de camions, de véhicules agricoles et/ou d'engins de terrassement.

4. Procédé selon l'une quelconque des revendications précédentes, **caractérisé par le fait que**, dans le cas où lesdits ELT proviennent de camions, lesdits granulés de caoutchouc brut fabriqués dans ladite phase de réduction volumétrique desdits ELT pavés ont une taille comprise entre 2,5 et 4 mm.

5. Procédé selon l'une quelconque des revendications précédentes, **caractérisé par le fait que**, dans le cas où lesdits ELT proviennent de véhicules agricoles et/ou d'engins de terrassement, lesdits granulés de caoutchouc brut fabriqués dans ladite phase de réduction volumétrique desdits ELT pavés ont une taille comprise entre 4 et 5 mm.

6. Procédé selon l'une quelconque des revendications précédentes, **caractérisé par le fait que**, dans le cas où lesdits ELT proviennent de voitures et/ou de véhicules de transport légers, lesdits granulés de caoutchouc brut fabriqués dans ladite phase de réduction volumétrique desdits ELT pavés ont une taille comprise entre 2,5 et 3,5 mm.

7. Procédé selon l'une quelconque des revendications précédentes, **caractérisé par le fait que**, dans le cas où lesdits ELT proviennent de véhicules agricoles et/ou d'engins de terrassement, il comprend une phase supplémentaire d'élimination des fibres plastiques dudit caoutchouc brut granulés.
